# EUROPEAN PATENT APPLICATION

(11) **EP 4 112 753 A1**
(43) Date of publication of application: **04.01.2023**
(21) Application number: 21761439.5
(22) Date of filing: 24.02.2021
(51) Int. Cl.: C21C 7/076, C22C 30/04, C22C 38/00, C22C 38/58

(54) **STAINLESS STEEL, STAINLESS STEEL MATERIAL, AND STAINLESS STEEL PRODUCTION METHOD**

(30) Priority: 27.02.2020 JP 2020032107
(71) Applicant: NIPPON STEEL STAINLESS STEEL CORPORATION, Tokyo 100-0005 (JP)
(72) Inventor: SHIBATA, Tooru, Tokyo 100-0005 (JP); TANAKA, Akira, Tokyo 100-0005 (JP); FUKUMOTO, Shigeo, Tokyo 100-0005 (JP); KIKUCHI, Shin, Tokyo 100-0005 (JP)
(74) Representative: Ablett, Graham Keith
(86) International application number: PCT/JP2021/006927
(87) International publication number: WO 2021/172378

(57) **Abstract**

To provide a stainless steel in which S is reduced and also the generation of hard inclusions is suppressed, a stainless steel material, and a method for producing a stainless steel. About inclusions with an equivalent circle diameter of 5 µm or more, the number density of a first inclusion having the average composition of, in mass%, CaO: 0% or more and 15% or less, SiO₂: 0% or more and 20% or less, Al₂O₃: 50% or more and 70% or less, and MgO: 10% or more and 40% or less is 0.5 inclusions/mm² or less, the number density of a second inclusion having CaO: 10% or more and 70% or less, SiO₂: 10% or more and 65% or less, Al₂O₃: 20% or less, MgO: 5% or more and 50% or less, and CaF₂: 0% or more and 5% or less is 0.2 inclusions/mm² or less, and the number density of a third inclusion having CaO: 5% or more and 40% or less, SiO₂: 10% or more and 40% or less, Al₂O₃: 10% or more and 40% or less, MgO: 5% or more and 30% or less, and CaF₂: 5% or more and 40% or less is 0.005 inclusions/mm² or more and 0.5 inclusions/mm² or less.

## Description

### TECHNICAL FIELD

The present invention relates to a stainless steel having a few hard inclusions, a stainless steel material, and a method for producing a stainless steel.

### BACKGROUND ART

S (sulfur), having an effect on rusting, may be required to reduce its concentration in a method for producing a stainless steel.

In order to reduce the concentration of S, slag basicity in a refining slag, i.e. CaO/SiO₂ ratio (C/S ratio) is conventionally increased. In this method, hard inclusions such as MgO·Al₂O₃ and CaO·MgO·SiO₂ exist in a steel. Because the inclusions are hard, they are not cut by a rolling step and are exposed on the surface. Therefore, defects (flaws) are easily generated on product surfaces, which has a negative effect on the manufacturability of a steel material.

Therefore, a method for suppressing the generation of MgO·Al₂O₃, a harmful non-metallic inclusion, by using ferrosilicon having low concentrations of Al, Ca, and Mg when refining a stainless steel is known (see e.g. PTL 1).

In this method, however, desulfurization properties sufficient to control the shape of inclusions may not be obtained, and there is a risk that hot workability will be reduced.

A method for producing a stainless steel with good surface quality is also known, in which the generation of MgO·Al₂O₃, a harmful non-metallic inclusion, in molten steel is suppressed by restricting slag basicity and trace components such as Mg, Al and Ca in molten steel to prevent the adhesion thereof to the inside of a nozzle (see e.g. PTL 2).

In this method, however, there is a risk that the CaO·MgO·SiO₂-based inclusion will be generated as a hard crystal inclusion with low Al₂O₃ because the slag basicity is 2 or more and the concentration of Al₂O₃ in a slag is less than 5.0 mass%.

### CITATION LIST

### Patent Literature

PTL 1: Japanese Laid-open Patent Publication No. 2001-26811
PTL 2: Japanese Patent No. 6146908

### SUMMARY OF INVENTION

### Technical Problem

As described above, a stainless steel, in which S is reduced and also which has a few hard inclusions, and a stainless steel material with a few surface defects (surface flaws) have been desired.

The present invention has been made in view of such points, and an object thereof is to provide a stainless steel in which S is reduced and also the generation of hard inclusions is suppressed, a stainless steel material, and a method for producing a stainless steel.

### Solution to Problem

The stainless steel according to claim 1 contains C: 0.0001 mass% or more and 0.15 mass% or less, Si: 0.3 mass% or more and 2.0 mass% or less, Mn: 0.1 mass% or more and 5 mass% or less, Ni: 5 mass% or more and 20 mass% or less, S: 0.0001 mass% or more and 0.003 mass% or less, Cr: 16 mass% or more and 25 mass% or less, Ca: 0.0001 mass% or more and 0.002 mass% or less, O: 0.0001 mass% or more and 0.004 mass% or less, Al: 0.02 mass% or less, Mg: 0.002 mass% or less, and N: 0.0001 mass% or more and 0.5 mass% or less, and the remainder including Fe and inevitable impurities, wherein about inclusions with an equivalent circle diameter of 5 µm or more, the number density of a first inclusion having the average composition of CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less is 0.5 inclusions/mm² or less, the number density of a second inclusion having the average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less is 0.2 inclusions/mm² or less, and the number density of a third inclusion having the average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less is 0.005 inclusions/mm² or more and 0.5 inclusions/mm² or less.

The stainless steel according to claim 2 further contains at least one of Cu: 4 mass% or less, Mo: 5 mass% or less, REM: 0.003 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less in the stainless steel according to claim 1.

The stainless steel material according to claim 3 contains C: 0.0001 mass% or more and 0.15 mass% or less, Si: 0.3 mass% or more and 2.0 mass% or less, Mn: 0.1 mass% or more and 5 mass% or less, Ni: 5 mass% or more and 20 mass% or less, S: 0.0001 mass% or more and 0.003 mass% or less, Cr: 16 mass% or more and 25 mass% or less, Ca: 0.0001 mass% or more and 0.002 mass% or less, O: 0.0001 mass% or more and 0.004 mass% or less, Al: 0.02 mass% or less, Mg: 0.002 mass% or less, and N: 0.0001 mass% or more and 0.5 mass% or less, and the remainder including Fe and inevitable impurities, wherein about inclusions with an equivalent circle diameter of 5 µm or more, the number density of a first inclusion having the average composition of CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less is 0.5 inclusions/mm² or less, the number density of a second inclusion having the average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less is 0.1 inclusions/mm² or less, and the number density of a third inclusion having the average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less is 0.005 inclusions/mm² or more and 0.2 inclusions/mm² or less.

The stainless steel material according to claim 4 further contains at least one of Cu: 4 mass% or less, Mo: 5 mass% or less, REM: 0.003 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less in the stainless steel material according to claim 3.

The method for producing a stainless steel according to claim 5 is a method for producing a stainless steel to produce the stainless steel according to claim 1 or 2, the method including a refining step of performing refining in VOD or AOD, wherein CaF₂ is added so that the slag composition after the refining step will be, in mass% ratio, CaO/SiO₂: 1.7 or more and 3.0 or less, Al₂O₃: 6.0 mass% or less, MgO: 10.0 mass% or less, and CaF₂: 5 mass% or more and 20 mass% or less and also an amount 3 times or more and 8 times or less higher than CaO/SiO₂, and moreover molten steel is stirred at a stirring power of 50 W/ton or more for 5 minutes or more after adding CaF₂.

### Advantageous Effects of Invention

According to the present invention, S can be reduced, and also the generation of hard inclusions can be suppressed.

### Description of Embodiments

One embodiment of the present invention will now be described.

The stainless steel of the present embodiment is an austenitic stainless steel, and contains 0.0001 mass% or more and 0.15 mass% or less of C (carbon), 0.3 mass% or more and 2.0 mass% or less of Si (silicon), 0.1 mass% or more and 5 mass% or less of Mn (manganese), 5 mass% or more and 20 mass% or less of Ni (nickel), 0.0001 mass% or more and 0.003 mass% or less of S (sulfur), 16 mass% or more and 25 mass% or less of Cr (chromium), 0.0001 mass% or more and 0.002 mass% or less of Ca (calcium), 0.0001 mass% or more and 0.004 mass% or less of O (oxygen), 0.02 mass% or less of Al (aluminum), 0.002 mass% or less of Mg (magnesium), and 0.0001 mass% or more and 0.5 mass% or less of N (nitrogen), and the remainder including Fe (iron) and inevitable impurities. It should be noted that in addition to the above, the stainless steel may further contain at least one of 4 mass% or less of Cu (copper), 5 mass% or less of Mo (molybdenum), and 0.003 mass% or less of REM (rare-earth element) as needed. In addition, the stainless steel may contain predetermined amounts of elements such as Sn (tin), Nb (niobium), Ti (titanium), Co (cobalt), V (vanadium), W (tungsten), and B (boron).

In addition, the stainless steel of the present embodiment is produced as a stainless steel material such as a steel sheet with a sheet thickness of 0.3 mm to 10 mm, or a rod material or wire (steel wire, stainless wire) with a diameter of 5.0 mm to 40 mm after predetermined production steps described below.

In addition, in the stainless steel of the present embodiment, the number density of hard inclusions with a large equivalent circle diameter is adjusted to suppress surface defects on a stainless steel material produced using this stainless steel. The equivalent circle diameter means the diameter of a circle equal to the area of an inclusion. Specifically, the stainless steel of the present embodiment includes a first inclusion with an equivalent circle diameter of 5 µm or more, having the average composition of, in mass percentage, CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less (also referred to as e.g. spinel-containing inclusion), a second inclusion with an equivalent circle diameter of 5 µm or more, having the average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less (referred to as e.g. CMS-based inclusion), and a third inclusion, having the average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less (referred to as e.g. F-containing inclusion).

In the stainless steel of the present embodiment, furthermore, about the number of inclusions obtained by measuring an optional cross section, the number density of the first inclusion is adjusted to 0 inclusions/mm² or more and 0.5 inclusions/mm² or less, the number density of the second inclusion to 0 inclusions/mm² or more and 0.2 inclusions/mm² or less, the number density of the third inclusion to 0.005 inclusions/mm² or more and 0.5 inclusions/mm² or less. The first inclusion and the second inclusion are hard inclusions which are not easily cut and finely divided when a stainless steel material is produced by e.g. rolling a stainless steel, while the third inclusion is a soft inclusion which is relatively easily cut and finely divided by e.g. rolling. In the stainless steel material of the present embodiment, therefore, about the number of inclusions obtained by measuring an optional cross section, the number density of the first inclusion is 0 inclusions/mm² or more and 0.5 inclusions/mm² or less, and preferably 0 inclusions/mm² or more and 0.45 inclusions/mm² or less, the number density of the second inclusion is 0 inclusions/mm² or more and 0.1 inclusions/mm² or less, and the number density of the third inclusion is 0.005 inclusions/mm² or more and 0.2 inclusions/mm² or less.

C is an austenite stabilizing element, and the hardness and strength of a stainless steel increase by containing C. In contrast, when C is excessively contained, it reacts with Cr or Mn in a base material to deteriorate corrosion resistance. Therefore, the C content is 0.0001 mass% or more and 0.15 mass% or less, and preferably 0.1 mass% or less.

Si is an essential element for deoxidation under low Al conditions. When the Si content is higher than 2.0 mass%, the base material of a stainless steel becomes hard. Therefore, the Si content is 0.3 mass% or more and 2.0 mass% or less, and preferably 0.5 mass% or more.

Mn is an effective element for deoxidation, and also an austenite stabilizing element. When the Mn content is lower than 0.1 mass%, the Cr₂O₃ percentage content in inclusions increases, and hard inclusions are thus easily generated. Therefore, the Mn content is 0.1 mass% or more and 5 mass% or less, and preferably 0.5 mass% or more.

Ni is an element which enhances the corrosion resistance of a stainless steel, and also an austenite stabilizing element. The Ni content is 5 mass% or more and 20 mass% or less.

When the S content is higher than 0.003 mass%, sulfide-based inclusions are generated, which has a negative effect on corrosion resistance and workability at the time of hot rolling. Therefore, the S content is 0.0001 mass% or more and 0.003 mass% or less, and preferably 0.002 mass% or less.

Cr is an essential element to secure the corrosion resistance of a stainless steel. However, when the Cr content is higher than 25 mass%, the production of a stainless steel becomes difficult, and also the Cr₂O₃ percentage content in inclusions increases, and thus hard inclusions are generated. Therefore, the Cr content is 16 mass% or more and 25 mass% or less.

Cu is an element which enhances the workability of a stainless steel, and also an austenite stabilizing element. A case where the Cu content is higher than 4.0 mass% has a negative effect on manufacturability due to hot shortness. In addition, Cu is a selective element, and a case where Cu is not added is also included. Therefore, the Cu content is 0 mass% or more and 4.0 mass% or less.

Mo is an element which enhances the corrosion resistance of a stainless steel. However, a case where the Mo content is higher than 5 mass% is not desired because sigma phase generation is promoted, and base material embrittlement is caused. Therefore, the Mo content is 0 mass% (including a case where Mo is not added) or more and 5 mass% or less, and preferably 0.01 mass% or more and 3 mass% or less.

Al is an element which may be added as a deoxidizing material to a stainless steel produced using a versatile refining method, and an element which inevitably enters a steel deoxidized with Si such as the present invention due to erosion of e.g. impurities and a refractory in a raw material. In addition, when the Al content is higher than 0.02 mass%, large and hard MgO·Al₂O₃ and/or large and hard MnO·Al₂O₃·Cr₂O₃ are generated, which has a negative effect on the incidence of surface defects. Therefore, the Al content is 0 mass% (including a case where Al is not added) or more and 0.02 mass% or less, and preferably 0.003 mass% or less.

Ca is an element which improves the hot workability of a stainless steel; however, a case where Ca is excessively contained has a negative effect on the generation of hard inclusions such as CaO·SiO₂. Therefore, the Ca content is 0.0001 mass% or more and 0.002 mass% or less.

Mg is an element which inevitably enters a stainless steel produced using a versatile refining method. In addition, when the Mg content is higher than 0.002 mass%, large and hard MgO·Al₂O₃ is generated, which has a negative effect on the incidence of surface defects. Therefore, the Mg content is 0 mass% (including a case where Mg is not added) or more and 0.002 mass% or less, and preferably 0.001 mass% or less.

When the O content is lower than 0.0001 mass%, Si and Mn are not oxidized, and the MgO concentration and the Al₂O₃ concentration increase in an inclusion. Therefore, large and hard MgO·Al₂O₃ is generated, which has a negative effect on the incidence of surface defects in a stainless steel. In addition, when the O content is higher than 0.004 mass%, a reduction in S becomes difficult. Therefore, the O content is 0.0001 mass% or more and 0.004 mass% or less.

N is an element which enhances the corrosion resistance of a stainless steel, and also an austenite stabilizing element. When the N content is higher than 0.5 mass%, air bubbles are generated in a steel ingot, which have a negative effect on the manufacturability of a stainless steel. Therefore, the N content is 0.0001 mass% or more and 0.5 mass% or less.

REM is an element which improves the hot workability of a stainless steel. When the REM content is higher than 0.003 mass%, nozzle clogging occurs, which has a negative effect on manufacturability. In addition, REM is a selective element, and a case where REM is not added is also included. Therefore, the REM content is 0 mass% or more and 0.003 mass% or less.

As with Ca, B is an element which improves the hot workability of a stainless steel, and may be thus added in a range of 0.0050 mass% or less as needed. When B is added, the B content is preferably 0.0001 mass% or more and 0.0030 mass% or less.

Ti and Nb generate precipitation together with C or N, and are effective to prevent grain coarsening at the time of heat treatment. Therefore, each may be added in a range of 0.50 mass% or less. When Ti and Nb are added, each content is preferably 0.01 mass% or more and 0.30 mass% or less.

V, W, Co, and Sn all are elements which enhance the corrosion resistance of a stainless steel, and may be added as needed. When they are added, each content is preferably V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

Next, methods for producing the above stainless steel and stainless steel material will be described.

When producing the above stainless steel, a raw material is melted and refined to smelt a stainless steel having components adjusted as described above.

In the refining step, VOD or AOD is used.

The present embodiment focuses on CaF₂, which is known to significantly reduce the melting point of CaO-SiO₂-based and CaO-Al₂O₃-based oxides. By setting the CaF₂ concentration in a slag to an appropriate range, the CaF₂ concentration in an inclusion increases to suppress the generation of hard crystal inclusions with low Al₂O₃, and to soften inclusions generated.

Specifically, in the present embodiment, CaF₂ is added depending on the amount of a slag so that the slag composition after the refining step will be, in mass% ratio, CaO/SiO₂: 1.7 or more and 3.0 or less, preferably 1.7 or more and 2.3 or less, Al₂O₃: 6.0 mass% or less, preferably 4.0 mass% or less, MgO: 10.0 mass% or less, preferably 8.0 mass% or less, and CaF₂: 5 mass% or more and 20 mass% or less, preferably 7 mass% or more and 15 mass% or less and also an amount 3 times or more and 8 times or less higher than CaO/SiO₂. In addition, in order to sufficiently display the effect of suppressing inclusions by CaF₂, molten steel is stirred at a stirring power of 50 W/ton or more for 5 minutes or more after adding CaF₂. When the stirring power is less than 50 W/ton or the stirring time is less than 5 minutes, CaF₂ is not sufficiently mixed in a suspended slag which causes the first inclusion and second inclusion, and thus the first inclusion and second inclusion excessively increase. When the stirring power is 150 W/ton or more, the second inclusion catches a refining slag existing on the molten steel and excessively increases. The upper limit of the stirring time is not particularly determined, but the stirring time is preferably 30 minutes or less because the effect by stirring is saturated while loads of equipment and efficiency for the production are reduced. In addition to methods by gas blowing in VOD and LF, stirring can be also carried out by other methods such as mechanical mixing and electromagnetic stirring.

After the refining step followed by the continuous casting process, a stainless steel such as a slab with a predetermined thickness or a billet with a predetermined square size is formed.

After that, the slab with a predetermined thickness is subjected to a hot rolling step and pickling step to produce a stainless steel sheet, a stainless steel material with a predetermined thickness, or the billet with a predetermined square size is subjected to a hot rolling step and pickling step to produce a rod/wire (steel wire, stainless wire), a stainless steel material with a predetermined diameter. In any case, an annealing step and/or pickling step may be then carried out depending on dimensions required. After the pickling step, a cold rolling step may be further carried out.

As described above, in molten stainless steel after refining by VOD or AOD, both S can be reduced and inclusion composition can be controlled by adjusting the composition of a floating slag and holding the molten stainless steel for sufficient time after refining. Specifically, a stainless steel can be produced, which includes a first inclusion having the average composition of CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less at 0 inclusions/mm² or more and 0.5 inclusions/mm² or less, a second inclusion having the average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less at 0 inclusions/mm² or more and 0.2 inclusions/mm² or less, and a third inclusion having the average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less at 0.005 inclusions/mm² or more and 0.5 inclusions/mm² or less, that is, in which S is reduced, in other words, the corrosion resistance is good, and the generation of hard inclusions is suppressed. Using this stainless steel, stainless steel materials, such as a steel sheet and a rod/wire (steel wire, stainless wire), with good quality can be produced, which include the first inclusion at 0 inclusions/mm² or more and 0.5 inclusions/mm² or less, the second inclusion at 0 inclusions/mm² or more and 0.1 inclusions/mm² or less, and the third inclusion at 0.005 inclusions/mm² or more and 0.2 inclusions/mm² or less, that is, in which S is reduced, in other words, corrosion resistance is excellent, and the generation of hard inclusions is suppressed to have a few surface defects. Examples

### (Examples 1)

Examples and Comparative Examples will now be described.

Using 80 tons of an austenitic stainless steel, having each steel composition of samples No. 1 to 4 shown in Table 1, a slab, a stainless steel with a thickness of 200 mm, was smelted by an electric furnace, a converter, an AOD refining process and LF, and a continuous casting process. In addition, using 80 tons of an austenitic stainless steel, having each steel composition of samples No. 7 to 11, 13 and 15 shown in Table 1, a slab, a stainless steel with a thickness of 200 mm, was smelted by an electric furnace, a converter, a VOD refining process, and a continuous casting process.

The content amount of each element shown in Table 1 is a value by mass%. It should be noted that refining was performed with CaF₂ in a used slag changed between 0.0 and 20.0 depending on compositions in the refining step. In addition, after adding CaF₂, Ar bottom-blowing was carried out in VOD or LF, and molten steel was stirred at a stirring power of 65 to 120 W/ton for 7 to 22 minutes.

A steel ingot sample with a sheet thickness of 40 mm, a width of 40 mm and a depth of 15 mm was taken from a part in the smelted slab, having a place at the middle in the width direction and at 20 mm from the surface layer as the center.

Next, each slab was subjected to hot rolling, cold rolling, and pickling to obtain a cold-rolled coil of a stainless steel material with a sheet thickness of 0.3 mm to 10 mm, and a steel sheet sample was taken from the coil.

In addition, using 60 tons of an austenitic stainless steel, having each steel composition of samples No. 5, 6, 12 and 14 shown in Table 1, a billet of a stainless steel with a 150 mm square, was smelted by an electric furnace, an AOD refining process and LF, and a continuous casting process. It should be noted that refining was performed with CaF₂ in a used slag changed between 0.0 and 20.0 depending on compositions in reduction refining in AOD. In addition, molten steel was stirred at a stirring power of 100 W/ton for 20 minutes after adding CaF₂.

A steel ingot sample with a sheet thickness of 40 mm, a width of 40 mm and a depth of 15 mm was taken from a part in the smelted billet, having a place at the middle in the width direction and at 20 mm from the surface layer as the center.

Next, each billet was subjected to hot rolling, cold rolling, and pickling to obtain a rod/wire (steel wire, stainless wire), a stainless steel material with a diameter of 5 mm to 40 mm, and a sample was taken from the rod/wire (steel wire, stainless wire).

**[Table 1]**

| Cat ego ry | No. | Chemical components | | | | | | | | | | | | | Slag components | | | | Ope rat ion |
|---|---|---|---|---|---|---|---|---|---|---|---|---|---|---|---|---|---|---|---|
| | | C | Si | Mn | Ni | S | Cr | Cu | Mo | Al | N | Ca | Mg | O | C/S | Al₂ O₃ | MgO | CaF 2 | Ref ini ng met hod |
| Exa mpl es | 1 | 0.0 6 | 0.5 | 0.8 | 7.5 | 0.0 010 | 17. 5 | 0.3 3 | 0.2 | 0.0 05 | 0.0 11 | 0.0 006 | 0.0 001 | 0.0 030 | 1.9 | 2.1 | 8.8 | 11. 8 | AOD -LF |
| | 2 | 0.0 6 | 0.6 | 1.6 | 7.8 | 0.0 005 | 17. 6 | 0.3 | 0.3 | 0.0 13 | 0.0 29 | 0.0 015 | 0.0 004 | 0.0 015 | 2.5 | 4.7 | 9.2 | 18. 8 | AOD -LF |
| | 3 | 0.0 6 | 0.6 | 1.0 | 7.7 | 0.0 020 | 17. 5 | 2.6 | 0.2 | 0.0 07 | 0.0 13 | 0.0 007 | 0.0 001 | 0.0 036 | 1.7 | 1.8 | 2.2 | 10. 4 | AOD -LF |
| | 4 | 0.0 6 | 0.5 | 1.5 | 7.6 | 0.0 010 | 17. 8 | 0.3 1 | 0.3 | 0.0 10 | 0.2 00 | 0.0 006 | 0.0 000 | 0.0 034 | 1.9 | 3.2 | 6.1 | 9.2 | AOD -LF |
| | 5 | 0.0 2 | 0.7 | 1.0 | 10. 0 | 0.0 010 | 21. 3 | 0.3 5 | 2.0 | 0.0 10 | 0.0 11 | 0.0 006 | 0.0 000 | 0.0 027 | 1.8 | 3.7 | 7.1 | 7.3 | AOD -LF |
| | 6 | 0.0 2 | 0.7 | 1.0 | 10. 0 | 0.0 005 | 21. 2 | 0.3 4 | 2.1 | 0.0 09 | 0.0 10 | 0.0 013 | 0.0 004 | 0.0 028 | 3.0 | 2.4 | 9.3 | 19. 0 | AOD -LF |
| | 7 | 0.0 2 | 0.5 | 1.0 | 13. 7 | 0.0 010 | 17. 6 | 0.3 4 | 2.6 | 0.0 2 | 0.0 9 | 0.0 004 | 0.0 001 | 0.0 042 | 1.8 | 1.4 | 6.2 | 7.2 | VOD |
| | 8 | 0.0 2 | 0.7 | 1.0 | 12. 1 | 0.0 030 | 17. 3 | 0.3 5 | 2.1 | 0.0 03 | 0.0 12 | 0.0 006 | 0.0 001 | 0.0 048 | 1.7 | 1.6 | 8.8 | 8.0 | VOD |
| | 9 | 0.2 0 | 0.5 0 | 0.8 | 7.0 | 0.0 005 | 16. 1 | 0.2 | 0.3 | 0.0 05 | 0.0 3 | 0.0 015 | 0.0 000 | 0.0 020 | 2.4 | 2.2 | 5.0 | 15. 5 | VOD |
| | 10 | 0.0 4 | 2.5 0 | 0.8 | 12. 7 | 0.0 020 | 17. 5 | 0.2 | 2.2 | 0.0 09 | 0.0 41 | 0.0 010 | 0.0 005 | 0.0 023 | 2.0 | 1.4 | 10. 3 | 16. 7 | VOD |
| | 11 | 0.0 4 | 0.5 0 | 3.0 | 12. 1 | 0.0 010 | 19. 3 | 0.3 | 0.3 | 0.0 02 | 0.1 50 | 0.0 Oil | 0.0 004 | 0.0 030 | 2.3 | 1.7 | 7.8 | 15. 0 | VOD |
| Com par ati ve | 12 | 0.0 5 | 0.5 | 0.8 | 7.2 | 0.0 002 | 17. 3 | 0.3 | 0.3 | 0.0 03 | 0.0 06 | 0.0 008 | 0.0 002 | 0.0 032 | 2.0 | 1.3 | 5.3 | 3.1 | AOD -LF |
| | 13 | 0.0 6 | 0.5 | 0.7 | 7.2 | 0.0 010 | 17. 6 | 0.3 | 0.3 | 0.0 06 | 0.0 95 | 0.0 006 | 0.0 001 | 0.0 040 | 1.7 | 1.8 | 5.5 | 4.0 | VOD |
| Exa mpl es | 14 | 0.0 6 | 0.5 | 0.8 | 7.2 | 0.0 020 | 17. 5 | 0.3 | 0.3 | 0.0 20 | 0.0 36 | 0.0 007 | 0.0 002 | 0.0 024 | 1.9 | 6.5 | 5.0 | 7.0 | AOD -LF |
| | 15 | 0.0 5 | 0.5 | 0.7 | 7.4 | 0.0 005 | 17. 1 | 0.3 | 0.3 | 0.0 04 | 0.0 29 | 0.0 012 | 0.0 006 | 0.0 035 | 2.3 | 2.5 | 9.7 | 22. 0 | VOD |

Each of the taken samples was mirror-finished by polishing with emery paper and buffing.

After that, the number of all inclusions with an equivalent circle diameter of 5 µm or more existing in a 500 mm² area was counted using SEM (scanning electron microscope) at a magnification of 100X.

The ratios of CaO, SiO₂, Al₂O₃, MgO and CaF₂ in the composition of inclusions were measured by EDS to determine the inclusion type of the counted inclusions.

The first inclusion, second inclusion, and third inclusion are categorized depending on the determined types of the obtained inclusions to calculate their number density from the counted number of inclusions and the observed area.

In addition, the average value of the composition of 5 inclusions among inclusions having the top 20% of the inclusion size (the existing number is used when there were fewer than 5 inclusions) was calculated.

**[Table 2]**

| Cat ego ry | No. | Inclusion composition | | | | | | | | | | | | | | | | | |
|---|---|---|---|---|---|---|---|---|---|---|---|---|---|---|---|---|---|---|---|
| | | First inclusion | | | | | | Second inclusion | | | | | | Third inclusion | | | | | |
| | | Num ber den sit y (in clu sio ns/ mm²₎ | CaO | SiO 2 | Al₂ O₃ | MgO | CaF 2 | Num ber den sit y (in clu sio ns/ mm²₎ | CaO | SiO 2 | Al₂ O₃ | MgO | CaF 2 | Num ber den sit y (in clu sio ns/ mm²₎ | CaO | SiO 2 | Al₂ O₃ | MgO | CaF 2 |
| Exa mpl es | 1 | 0.4 3 | 9.4 | 10. 2 | 55. 8 | 24. 6 | 0.0 | 0.1 5 | 35. 4 | 36. 1 | 0.1 | 28. 3 | 0.0 | 0.0 5 | 20. 1 | 26. 8 | 9.8 | 6.4 | 16. 2 |
| | 2 | 0.0 7 | 7.2 | 13. 8 | 61. 5 | 17. 4 | 0.0 | 0.0 0 | - | - | - | - | - | 0.0 8 | 22. 3 | 26. 7 | 22. 6 | 8.7 | 8.8 |
| | 3 | 0.0 0 | - | - | - | - | - | 0.0 1 | 59. 9 | 36. 5 | 3.7 | 0.0 | 0.0 | 0.2 0 | 20. 8 | 30. 2 | 29. 7 | 13. 9 | 5.4 |
| | 4 | 0.0 1 | 6.1 | 13. 6 | 61. 2 | 19. 1 | 0.0 | 0.0 0 | - | - | - | - | - | 0.0 7 | 21. 9 | 24. 4 | 28. 6 | 4.6 | 8.5 |
| | 5 | 0.1 5 | 5.1 | 11. 5 | 63. 5 | 19. 9 | 0.0 | 0.0 8 | 35. 7 | 37. 8 | 0.1 | 26. 3 | 0.0 | 0.0 5 | 20. 8 | 27. 7 | 19. 2 | 10. 3 | 13. 5 |
| | 6 | 0.0 5 | 5.9 | 12. 8 | 61. 7 | 19. 6 | 0.0 | 0.0 0 | - | - | - | - | - | 0.0 8 | 20. 8 | 25. 0 | 26. 5 | 8.9 | 5.2 |
| | 7 | 0.0 1 | 9.6 | 17. 8 | 57. 6 | 15. 0 | 0.0 | 0.0 3 | 15. 6 | 42. 4 | 17. 9 | 24. 1 | 0.0 | 0.1 2 | 17. 9 | 21. 4 | 24. 3 | 9.3 | 8.1 |
| | 8 | 0.3 8 | 8.6 | 17. 4 | 57. 8 | 16. 2 | 0.0 | 0.0 2 | 51. 0 | 49. 0 | 0.0 | 0.0 | 0.0 | 0.0 9 | 21. 4 | 26. 3 | 23. 0 | 6.4 | 6.8 |
| | 9 | 0.0 4 | 12. 2 | 12. 2 | 53. 8 | 21. 9 | 0.0 | 0.0 0 | - | - | - | - | - | 0.0 8 | 21. 1 | 27. 6 | 19. 5 | 7.1 | 11. 7 |
| | 10 | 0.4 1 | 5.7 | 11. 9 | 64. 8 | 17. 6 | 0.0 | 0.0 2 | 63. 4 | 30. 9 | 3.2 | 2.5 | 0.0 | 0.0 7 | 23. 7 | 23. 5 | 26. 5 | 5.7 | 7.0 |
| | 11 | 0.2 7 | 9.4 | 17. 2 | 58. 3 | 15. 1 | 0.0 | 0.0 4 | 11. 3 | 36. 8 | 3.1 | 47. 6 | 1.3 | 0.0 7 | 17. 6 | 24. 3 | 23. 6 | 5.7 | 5.7 |
| Com par ati ve Exa mpl es | 12 | 0.2 1 | 7.1 | 13. 0 | 61. 5 | 18. 4 | 0.0 | 0.4 3 | 22. 6 | 37. 9 | 2.3 | 37. 2 | 0.0 | 0.0 1 | 15. 7 | 19. 5 | 35. 1 | 24. 1 | 5.6 |
| | 13 | 0.1 1 | 7.2 | 18. 4 | 58. 6 | 15. 8 | 0.0 | 0.3 4 | 13. 3 | 38. 8 | 1.4 | 45. 3 | 1.1 | 0.0 1 | 29. 7 | 30. 5 | 24. 8 | 9.0 | 6.0 |
| | 14 | 0.7 3 | 11. 4 | 18. 8 | 55. 4 | 14. 4 | 0.0 | 0.0 9 | 25. 8 | 37. 8 | 2.1 | 34. 3 | 0.0 | 0.0 1 | 6.2 | 16. 0 | 55. 6 | 16. 4 | 5.7 |
| | 15 | 0.1 6 | 7.7 | 14. 4 | 59. 9 | 17. 9 | 0.0 | 0.0 0 | - | - | - | - | - | 0.5 2 | 7.6 | 11. 8 | 9.3 | 8.8 | 49. 3 |

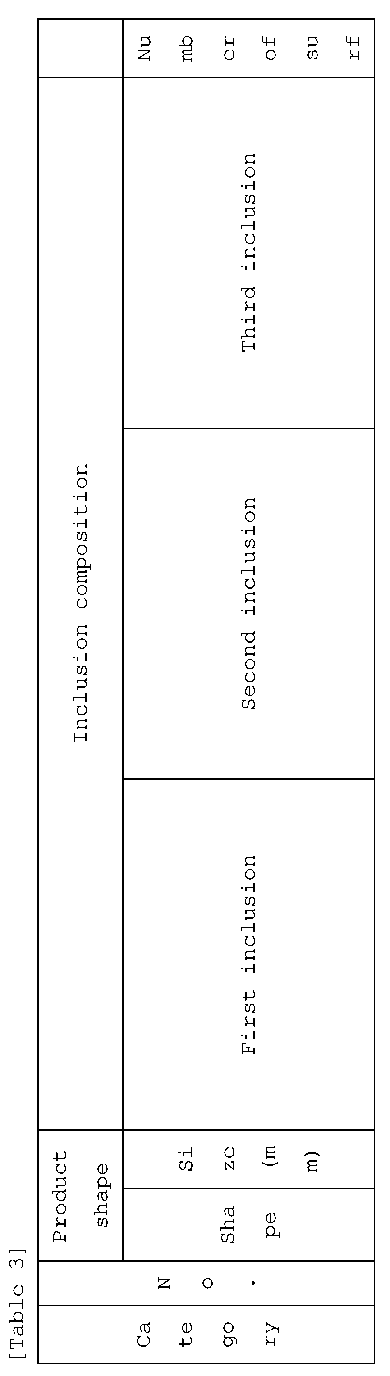

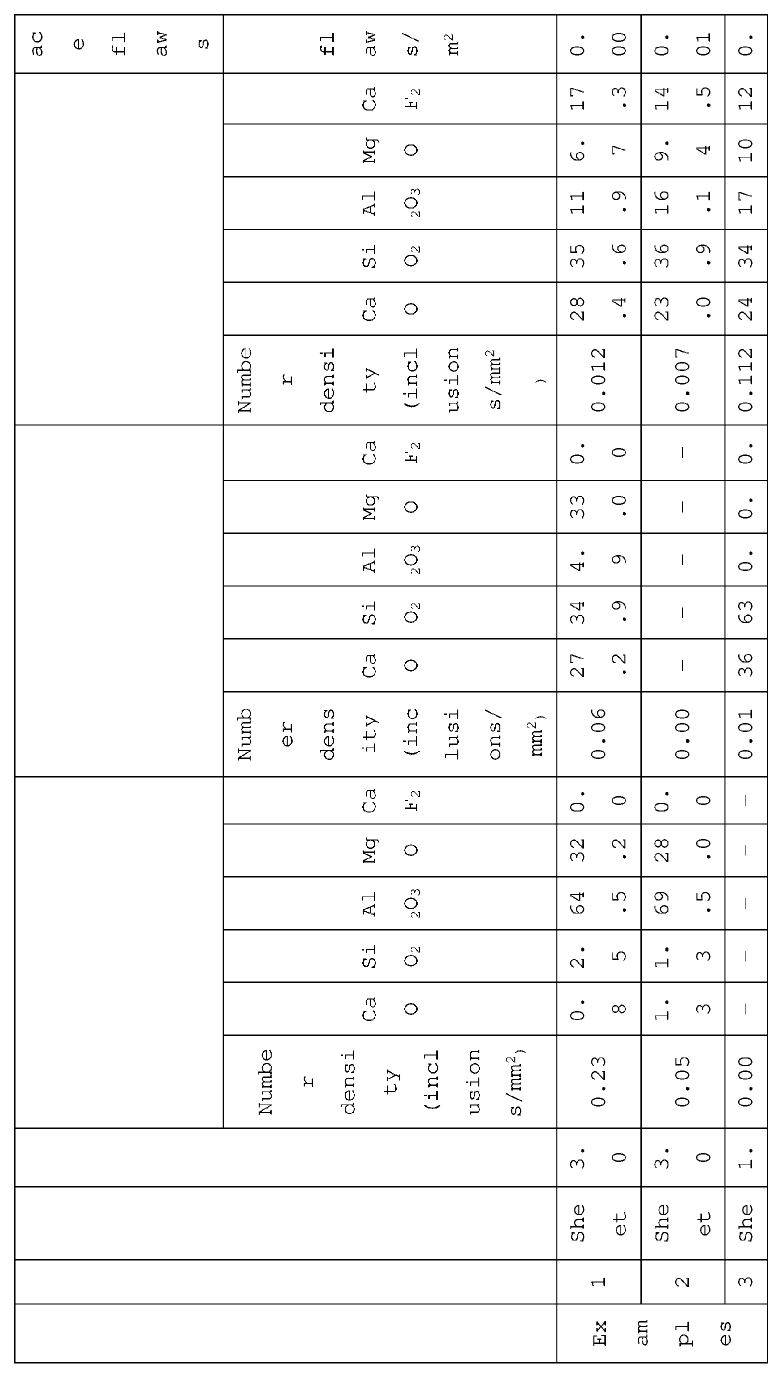

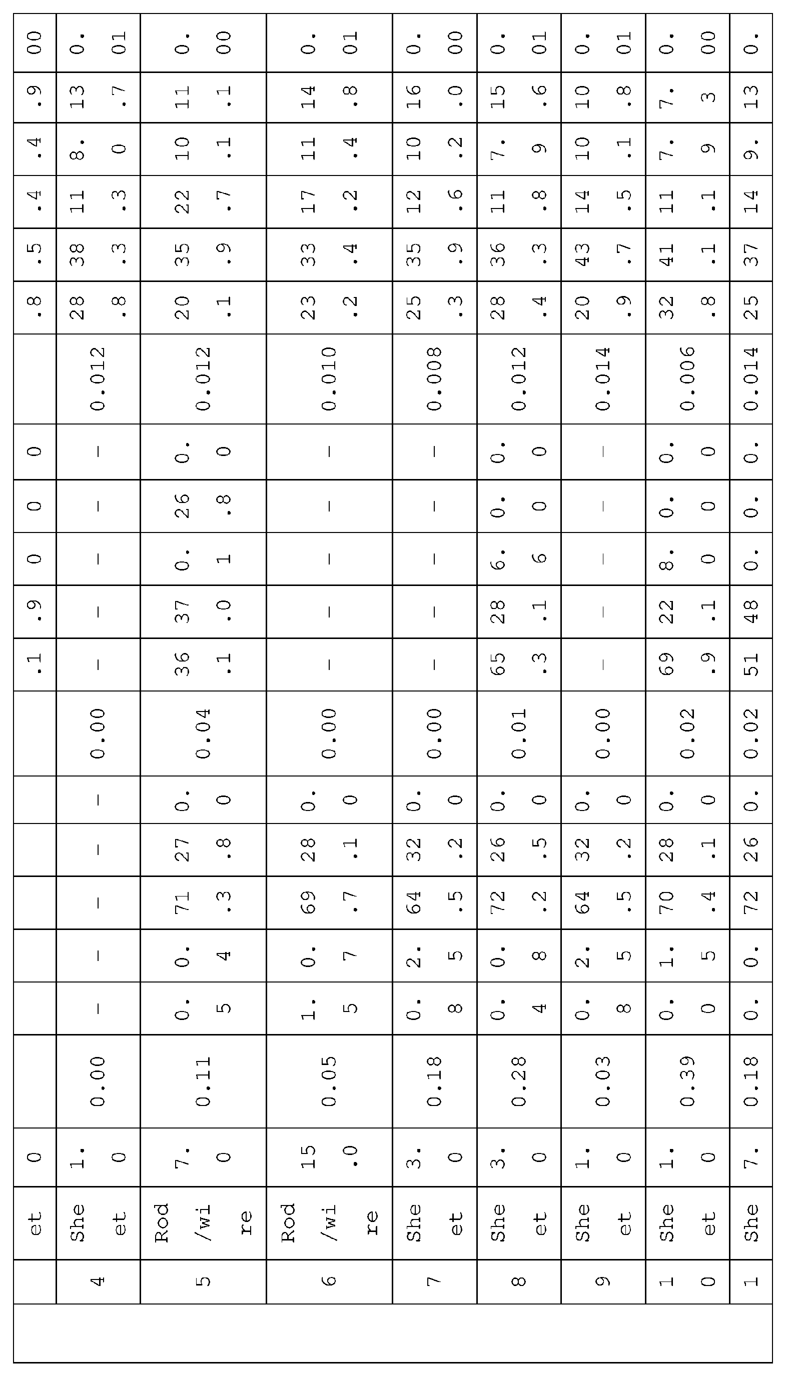

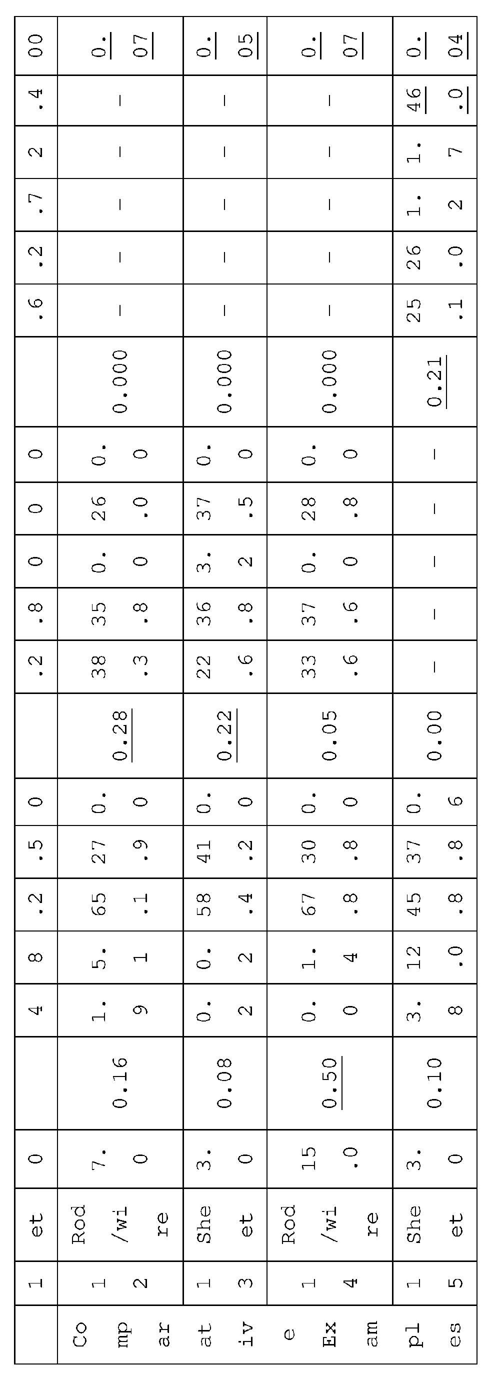

Samples No. 1 to 11 in Tables each correspond to Examples. Specifically, samples No. 1 to 4 and 7 to 11 in Table 2 are slab samples corresponding to the steels of samples No. 1 to 4 and 7 to 11 in Table 1, and samples No. 5 and 6 in Table 2 are billet samples corresponding to the steels of samples No. 5 and 6 in Table 1. In addition, samples No. 1 to 4 and 7 to 11 in Table 3 are steel sheet samples corresponding to the steels of samples No. 1 to 4 and 7 to 11 in Table 1, and samples No. 5 and 6 in Table 3 are rod/ wire (steel wire, stainless wire) samples corresponding to the steels of samples No. 5 and 6 in Table 1. The observed site of each of the slabs and billets was a C cross section, the observed site of each of the steel sheets was a surface, and the observed site of each of the rod/wire (steel wire, stainless wire) was an optional cross section.

Because these samples met the ranges of the components in a steel, and the slag basicity (CaO/SiO₂ ratio) of a slag in the refining step, and the concentrations of Al₂O₃, MgO and CaF₂ in a slag in the above embodiment, good quality could be obtained, in which S was suppressed and also which had a few hard inclusions, i.e. a few surface defects.

In contrast, samples No. 12 to 15 in Tables each correspond to Comparative Examples. Specifically, samples No. 13 and 15 in Table 2 are slab samples corresponding to the steels of samples No. 13 and 15 in Table 1, and samples No. 12 and 14 in Table 2 are billet samples corresponding to the steels of samples No. 12 and 14 in Table 1. In addition, samples No. 13 and 15 in Table 3 are steel sheet samples corresponding to the steels of samples No. 13 and 15 in Table 1, and samples No. 12 and 14 in Table 3 are rod/ wire (steel wire, stainless wire) samples corresponding to the steels of samples No. 12 and 14 in Table 1. The observed sites thereof were the same as those in Examples.

Because samples No. 12 and 13 were beyond the range of the concentration of CaF₂ in a slag in the above embodiment (underlines in Table 1), the suppression of the hard second inclusion by sufficiently generating the third inclusion with a low melting point could not be carried out (underlines in Table 2 and Table 3), and thus good products with a few surface defects could not be obtained.

In addition, because sample No. 14 was beyond the range of the concentration of Al₂O₃ in a slag in the above embodiment (underline in Table 1), a large amount of the first inclusion including spinel (MgO·Al₂O₃) crystals was generated (underlines in Table 2 and Table 3), and thus good products with a few surface defects could not be obtained.

Furthermore, because sample No. 15 was beyond the range of the concentration of CaF₂ in a slag in the above embodiment (underlines in Table 1), a large amount of the inclusion excessively containing CaF₂ (third inclusion) was generated (underlines in Table 2 and Table 3), and thus good products with a few surface defects could not be obtained.

### (Example 2)

Samples No. 16 to 25 shown in Table 4 were produced in the same manner as in Example 1 except that the amount of bottom blowing gas was changed in VOD or LF, and the stirring power and the stirring time were changed as shown in Table 4, and a slab, billet, steel sheet or rod/wire (steel wire, stainless wire) sample was taken and evaluated.

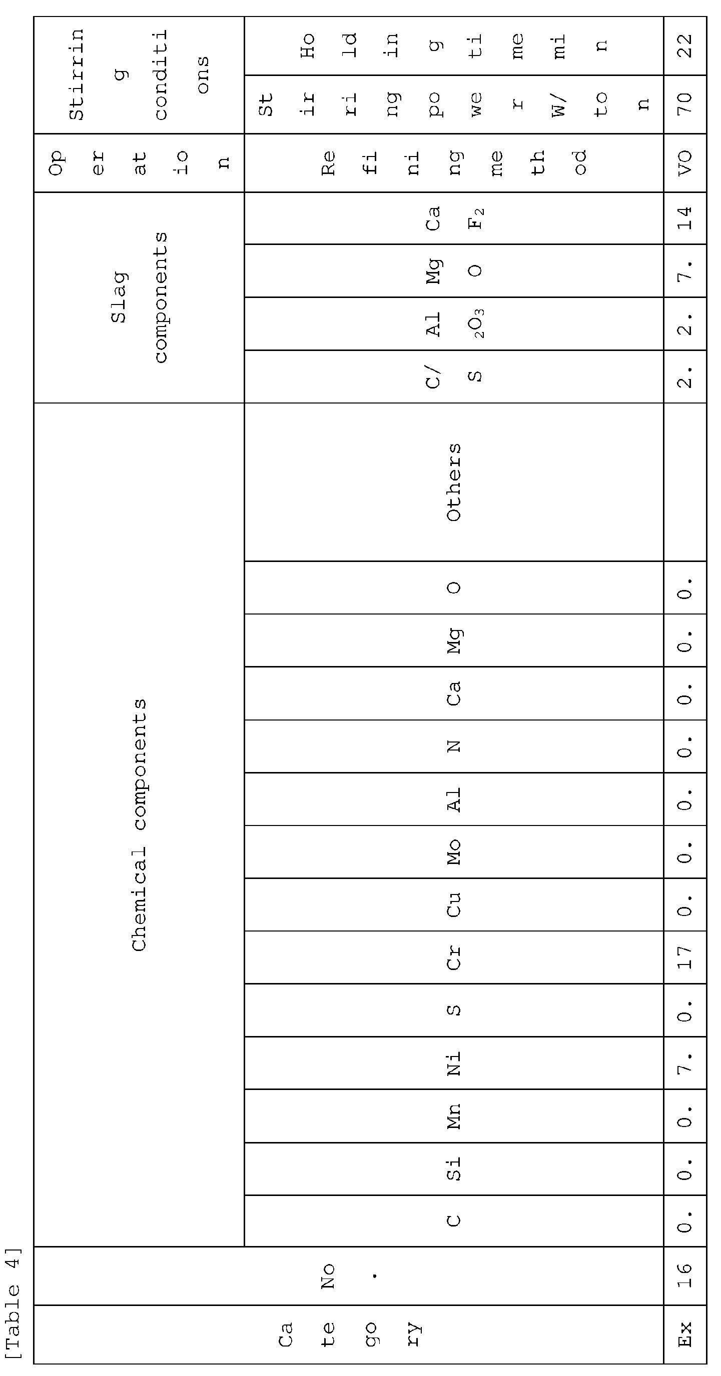

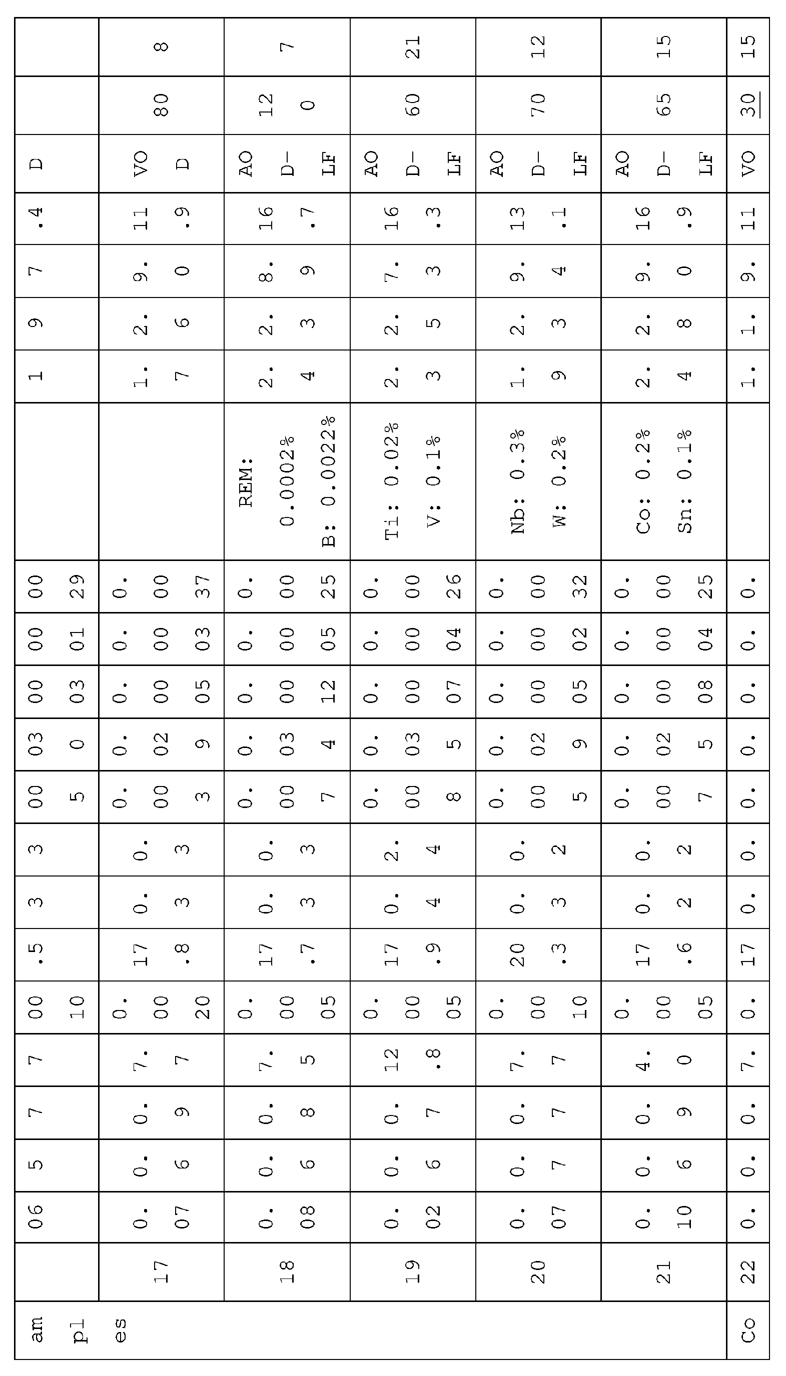

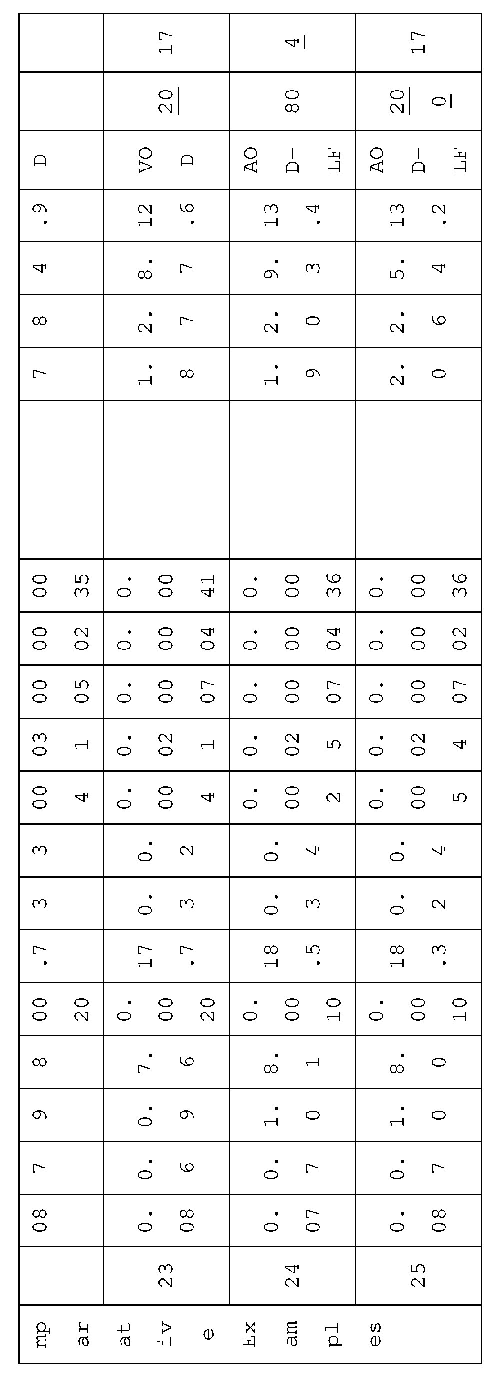

**[Table 5]**

| Cat ego ry | | Inclusion composition | | | | | | | | | | | | | | | | | |
|---|---|---|---|---|---|---|---|---|---|---|---|---|---|---|---|---|---|---|---|
| | | First inclusion | | | | | | Second inclusion | | | | | | Third inclusion | | | | | |
| | | Num ber density (inclusions/mm²₎ | CaO | SiO 2 | Al₂ O₃ | MgO | CaF 2 | Num ber density (inclusions/mm²₎ | CaO | SiO 2 | Al₂ O₃ | MgO | CaF 2 | Num ber density (inclusions/mm²₎ | CaO | SiO 2 | Al₂ O₃ | MgO | CaF 2 |
| Exa mpl es | 16 | 0.0 6 | 9.6 | 10. 2 | 60. 3 | 19. 9 | 0.0 | 0.0 2 | 34. 3 | 42. 7 | 0.0 | 23. 0 | 0.0 | 0.1 1 | 16. 5 | 44. 3 | 19. 7 | 6.7 | 12. 9 |
| | 17 | 0.5 5 | 7.8 | 10. 3 | 66. 0 | 15. 9 | 0.0 | 0.0 4 | 31. 6 | 48. 0 | 0.2 | 20. 2 | 0.0 | 0.1 3 | 23. 5 | 38. 4 | 20. 7 | 3.3 | 14. 2 |
| | 18 | 0.3 5 | 8.0 | 12. 0 | 62. 5 | 17. 5 | 0.0 | 0.1 5 | 30. 1 | 46. 3 | 0.5 | 23. 2 | 0.0 | 0.0 7 | 19. 8 | 46. 0 | 22. 1 | 4.4 | 7.7 |
| | 19 | 0.1 1 | 10. 0 | 14. 3 | 57. 4 | 18. 3 | 0.0 | 0.1 0 | 33. 5 | 40. 8 | 0.1 | 25. 6 | 0.0 | 0.0 5 | 19. 0 | 41. 8 | 22. 7 | 6.8 | 9.7 |
| | 20 | 0.4 5 | 8.7 | 10. 5 | 61. 4 | 19. 4 | 0.0 | 0.1 0 | 34. 5 | 41. 9 | 0.1 | 23. 6 | 0.0 | 0.0 5 | 17. 3 | 52. 7 | 10. 2 | 3.6 | 16. 2 |
| | 21 | 0.2 4 | 9.0 | 11. 5 | 61. 1 | 18. 4 | 0.0 | 0.1 9 | 35. 7 | 38. 9 | 0.4 | 25. 1 | 0.0 | 0.0 6 | 15. 0 | 42. 7 | 18. 2 | 7.1 | 17. 1 |
| Com par ati ve Exa mpl es | 22 | 0.4 8 | 7.3 | 11. 8 | 64. 3 | 16. 7 | 0.0 | 0.4 0 | 35. 6 | 38. 6 | 0.3 | 25. 5 | 0.0 | 0.0 1 | 16. 7 | 54. 7 | 12. 4 | 3.5 | 12. 7 |
| | 23 | 0.1 6 | 8.2 | 13. 1 | 60. 8 | 17. 9 | 0.0 | 0.3 7 | 36. 2 | 38. 0 | 0.1 | 25. 7 | 0.0 | 0.0 1 | 18. 7 | 46. 3 | 16. 6 | 3.8 | 14. 7 |
| | 24 | 0.6 1 | 7.3 | 11. 8 | 64. 3 | 16. 7 | 0.0 | 0.4 0 | 35. 6 | 38. 6 | 0.3 | 25. 5 | 0.0 | 0.0 2 | 16. 7 | 47. 4 | 12. 4 | 3.5 | 20. 0 |
| | 25 | 0.1 6 | 8.2 | 13. 1 | 60. 8 | 17. 9 | 0.0 | 0.3 7 | 36. 2 | 38. 0 | 0.1 | 25. 7 | 0.0 | 0.5 4 | 18. 7 | 46. 3 | 16. 6 | 3.8 | 14. 7 |

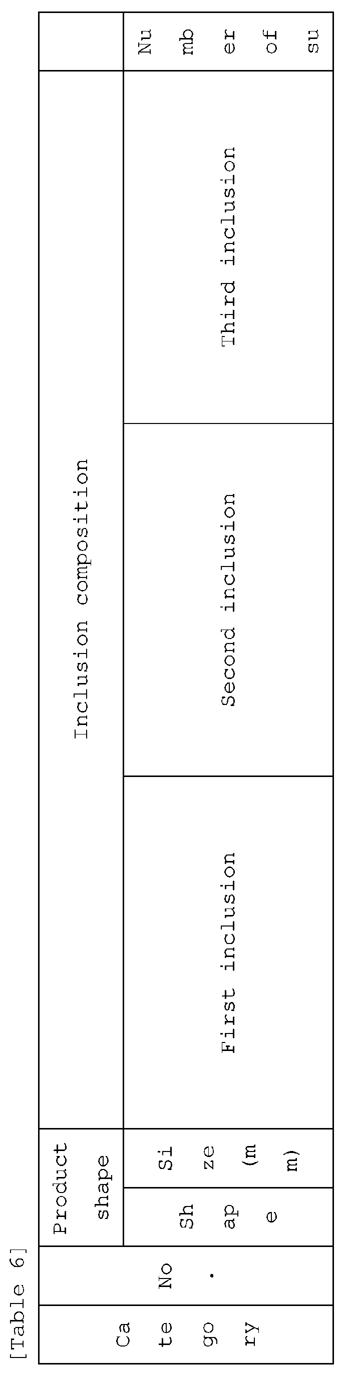

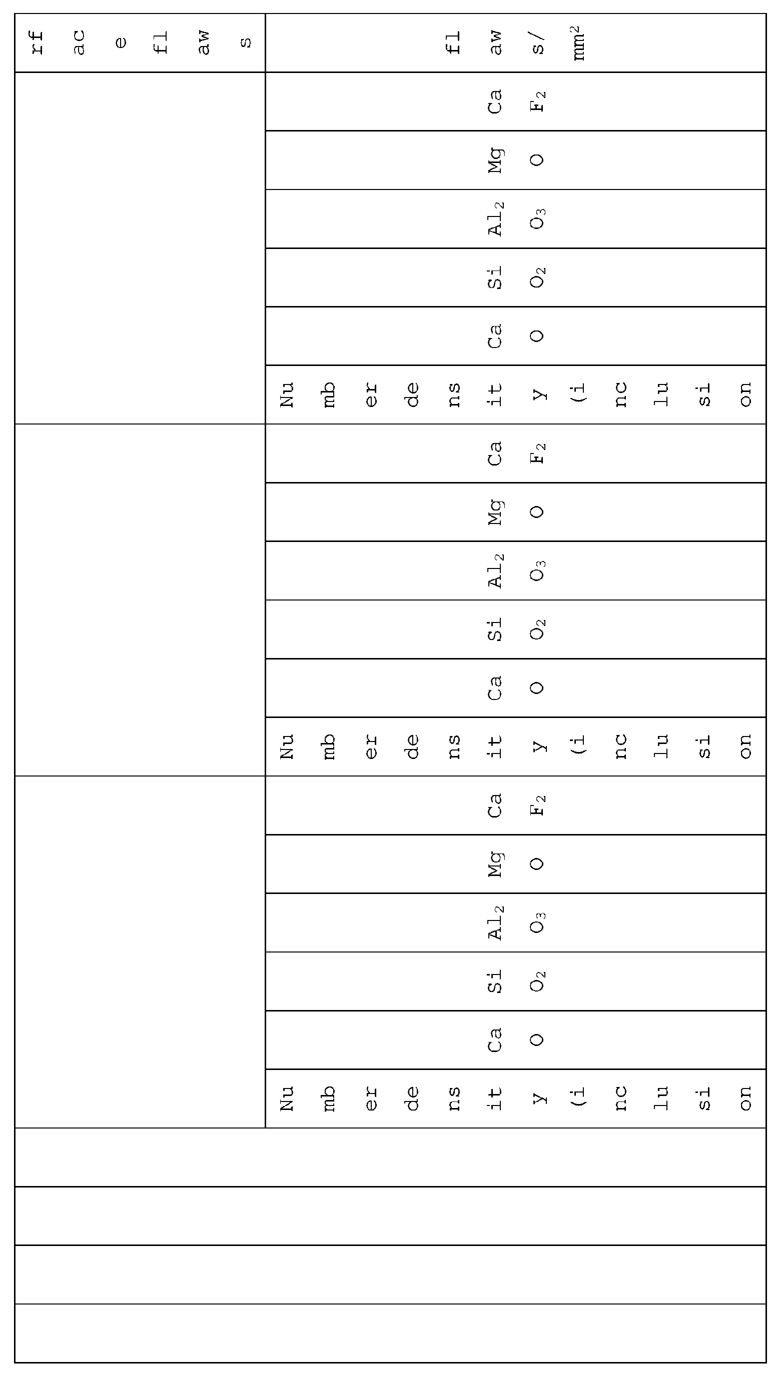

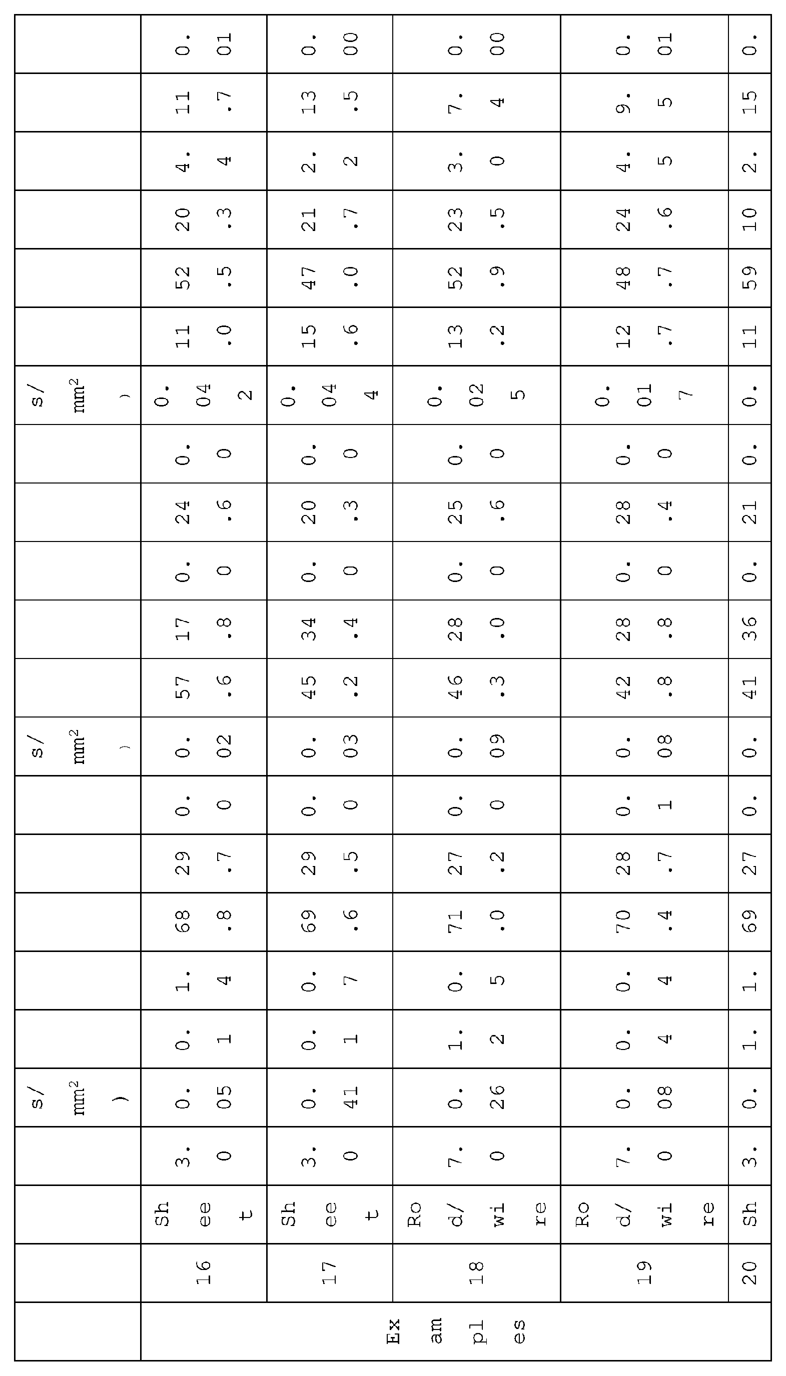

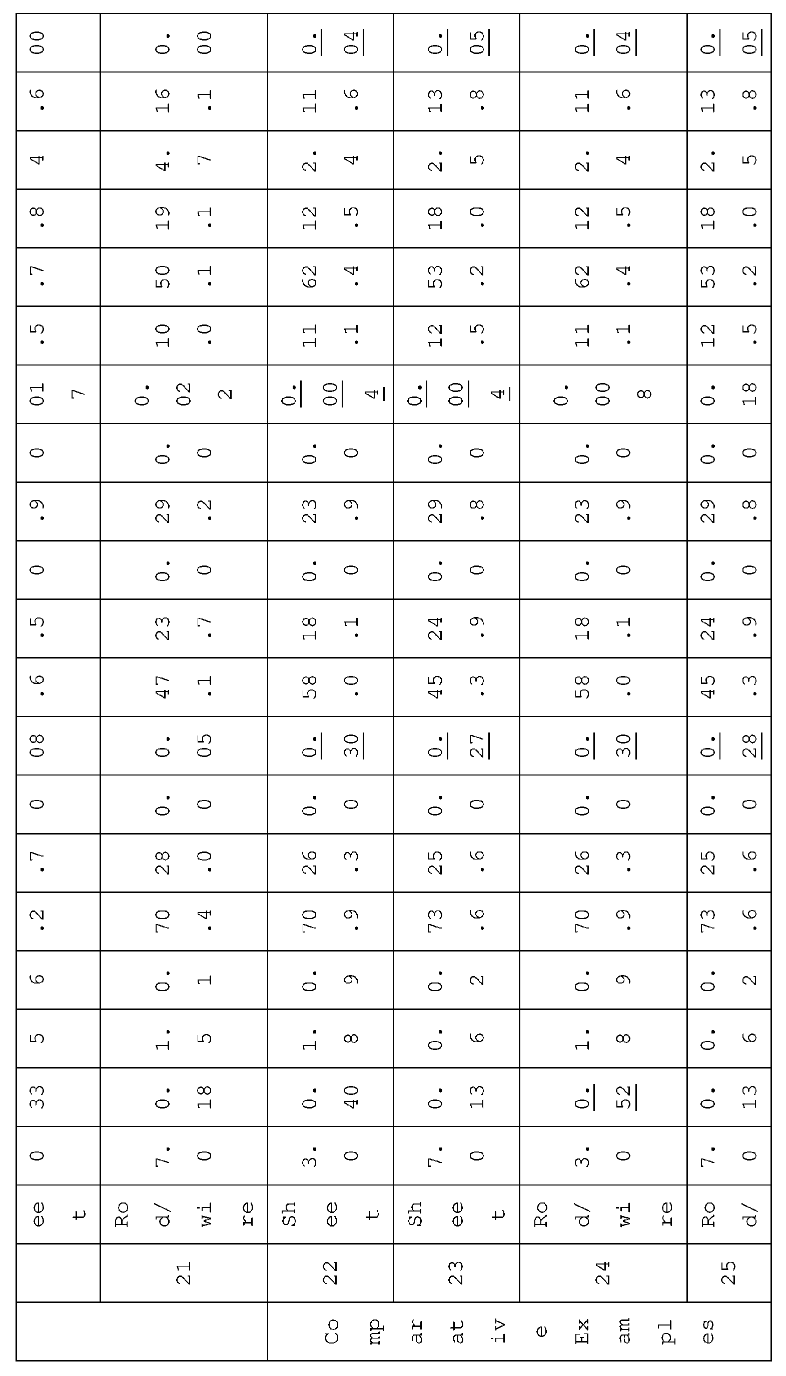

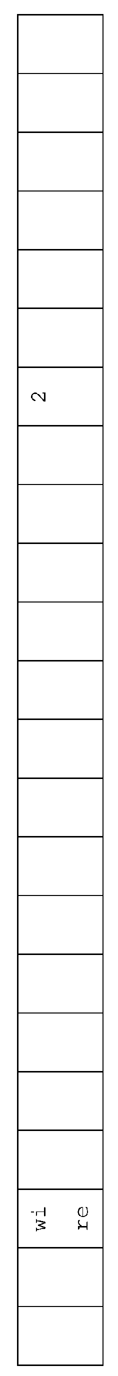

Samples No. 16 to 21 each correspond to Examples. Because these samples met the ranges of the components in a steel, and the slag basicity (CaO/SiO₂ ratio) of a slag in the refining step, and the concentrations of Al₂O₃, MgO and CaF₂ in a slag in the above embodiment, good quality could be obtained, in which S was suppressed and also which had a few hard inclusions, i.e. a few surface defects.

In contrast, samples No. 22 to 25 each correspond to Comparative Examples. Because these did not meet the stirring conditions of the present invention, although they met the range of the concentration of CaF₂ in a slag in the embodiment, the suppression of the hard second inclusion by sufficiently generating the third inclusion with a low melting point could not carried out (underlines in Table 5 and Table 6), and good products with a few surface defects could not be obtained.

Therefore, it was verified that as described in the above Examples, by meeting the conditions of the present invention, stainless steels such as a slab and billet, in which S was reduced and also hard inclusions were suppressed, and by suppressing hard inclusions, stainless steel materials such as a steel sheet and a rod/wire (steel wire, stainless wire), having a few surface defects, could be produced.

## Claims

1. A stainless steel, containing:
C: 0.0001 mass% or more and 0.15 mass% or less, Si: 0.3 mass% or more and 2.0 mass% or less, Mn: 0.1 mass% or more and 5 mass% or less, Ni: 5 mass% or more and 20 mass% or less, S: 0.0001 mass% or more and 0.003 mass% or less, Cr: 16 mass% or more and 25 mass% or less, Ca: 0.0001 mass% or more and 0.002 mass% or less, O: 0.0001 mass% or more and 0.004 mass% or less, Al: 0.02 mass% or less, Mg: 0.002 mass% or less, and N: 0.0001 mass% or more and 0.5 mass% or less, and a remainder comprising Fe and inevitable impurities,
wherein about inclusions with an equivalent circle diameter of 5 µm or more,
a number density of a first inclusion having average composition of CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less is 0.5 inclusions/mm² or less,
a number density of a second inclusion having average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less is 0.2 inclusions/mm² or less, and
a number density of a third inclusion having average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less is 0.005 inclusions/mm² or more and 0.5 inclusions/mm² or less.

2. The stainless steel according to claim 1, further containing:
at least one of Cu: 4 mass% or less, Mo: 5 mass% or less, REM: 0.003 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

3. A stainless steel material, containing:
C: 0.0001 mass% or more and 0.15 mass% or less, Si: 0.3 mass% or more and 2.0 mass% or less, Mn: 0.1 mass% or more and 5 mass% or less, Ni: 5 mass% or more and 20 mass% or less, S: 0.0001 mass% or more and 0.003 mass% or less, Cr: 16 mass% or more and 25 mass% or less, Ca: 0.0001 mass% or more and 0.002 mass% or less, O: 0.0001 mass% or more and 0.004 mass% or less, Al: 0.02 mass% or less, Mg: 0.002 mass% or less, and N: 0.0001 mass% or more and 0.5 mass% or less, and a remainder comprising Fe and inevitable impurities,
wherein about inclusions with an equivalent circle diameter of 5 µm or more,
a number density of a first inclusion having average composition of CaO: 0 mass% or more and 15 mass% or less, SiO₂: 0 mass% or more and 20 mass% or less, Al₂O₃: 50 mass% or more and 70 mass% or less, and MgO: 10 mass% or more and 40 mass% or less is 0.5 inclusions/mm² or less,
a number density of a second inclusion having average composition of CaO: 10 mass% or more and 70 mass% or less, SiO₂: 10 mass% or more and 65 mass% or less, Al₂O₃: 20 mass% or less, MgO: 5 mass% or more and 50 mass% or less, and CaF₂: 0 mass% or more and 5 mass% or less is 0.1 inclusions/mm² or less, and
a number density of a third inclusion having average composition of CaO: 5 mass% or more and 40 mass% or less, SiO₂: 10 mass% or more and 40 mass% or less, Al₂O₃: 10 mass% or more and 40 mass% or less, MgO: 5 mass% or more and 30 mass% or less, and CaF₂: 5 mass% or more and 40 mass% or less is 0.005 inclusions/mm² or more and 0.2 inclusions/mm² or less.

4. The stainless steel material according to claim 3, further containing:
at least one of Cu: 4 mass% or less, Mo: 5 mass% or less, REM: 0.003 mass% or less, B: 0.0001 mass% or more and 0.0050 mass% or less, Ti: 0.01 mass% or more and 0.50 mass% or less, Nb: 0.01 mass% or more and 0.50 mass% or less, V: 0.01 mass% or more and 1.00 mass% or less, W: 0.01 mass% or more and 1.00 mass% or less, Co: 0.01 mass% or more and 1.00 mass% or less, and Sn: 0.01 mass% or more and 1.00 mass% or less.

5. A method for producing a stainless steel to produce the stainless steel according to claim 1 or 2,
the method comprising a refining step of performing refining in VOD or AOD,
wherein CaF₂ is added so that slag composition after the refining step will be, in mass% ratio, CaO/SiO₂: 1.7 or more and 3.0 or less, Al₂O₃: 6.0 mass% or less, MgO: 10.0 mass% or less, and CaF₂: 5 mass% or more and 20 mass% or less and also an amount 3 times or more and 8 times or less higher than CaO/SiO₂, and moreover molten steel is stirred at a stirring power of 50 W/ton or more for 5 minutes or more after adding CaF₂.
